# EUROPÄISCHE PATENTSCHRIFT

(11) **EP 0 410 104 B1**
(45) Veröffentlichungstag und Bekanntmachung des Hinweises auf die Patenterteilung: **21.07.1993**
(21) Anmeldenummer: 90109741.0
(22) Anmeldetag: 22.05.1990
(51) Int. Cl.: B23B 27/16, B23C 5/22, B23C 5/24

(54) **Zerspanungswerkzeug**
Chip making machining tool
Outil d'usinage par enlèvement de copeaux

(30) Priorität: 26.07.1989 DE 3924688
(43) Veröffentlichungstag der Anmeldung: 30.01.1991
(73) Patentinhaber: Hermann Bilz GmbH & Co, 73730 Esslingen (DE)
(72) Erfinder: Braun, Harald, D-7300 Esslingen (DE)
(74) Vertreter: Kratzsch, Volkhard, Dipl.-Ing.

(56) Entgegenhaltungen:
- DE-A- 2 363 902
- DE-A- 2 444 319

## Beschreibung

Die Erfindung bezieht sich auf ein Zerspanungswerkzeug mit den im Oberbegriff des Anspruchs 1 angegebenen Merkmalen.

Bei einem bekannten Zerspanungswerkzeug dieser Art (DE- A-29 48 250, 23 63 902) ist die mindestens eine Schneidplatte über den drehverstellbaren Exzenter entweder unmittelbar in einer Richtung verstellbar oder mittelbar dadurch, daß die Schneidplatte in einem Plattenhalter, auch als Kassette bezeichnet, aufgenommen ist, der seinerseits über den Exzenter in einer Richtung verstellbar ist. Die Verstellbarkeit und Einstellbarkeit der mindestens einen Schneidplatte in dieser einen Richtung ist unzulänglich, berücksichtigt man, daß bei den einzelnen Werkzeugformen und Einsatzzwecken das Bedürfnis nach Justierbarkeit in verschiedenen Richtungen besteht, sei es, um werkzeugseitige Fertigungstoleranzen auszugleichen oder gezielt durch diese Einstellung eine gewünschte Bearbeitung an einem Werkstück zu erreichen.

Der Erfindung liegt die Aufgabe zugrunde, ein Zerspanungswerkzeug der im Oberbegriff des Anspruchs 1 definierten Art zu schaffen, das mit weiteren Einstellmöglichkeiten versehen und hinsichtlich der Einstellbarkeit verbessert ist.

Die Aufgabe ist durch die Merkmale des Anspruchs 1 gelöst.

Dadurch, daß der die Einstellung der mindestens einen Schneidplatte bzw. des Plattenhalters in einer Richtung bewirkende Exzenter quer zu seiner Längsachse seinerseits verstellbar und einstellbar gehalten ist, ist eine örtliche Verstellung des exzentrischen Teils dieses Exzenters quer zur Längsachse möglich, wobei unter "quer" sowohl eine Parallelverschiebung der Längsachse als auch eine solche Bewegungsrichtung verstanden wird, bei der die Längsachse des Exzenters um einen räumlich festen Abstützpunkt geschwenkt wird, so daß sie im Vergleich zur Ausgangsstellung unter einem zumindest spitzen Winkel verläuft. Eine Schneidplatte, die über den Exzenter z.B. axial oder radial verstellbar ist, kann somit dadurch, daß der Exzenter quer zu seiner Längsachse auch verstellbar ist, auch in dieser Richtung eingestellt werden. Z.B. bei einem einschneidigen Reibwerkzeug mit lediglich einer Schneidplatte, deren außen befindliche Schneide etwa parallel zur Längsmittelachse des Grundkörpers verläuft, kann eine Verstellung der Schneidplatte dergestalt erfolgen, daß deren äußere Schneidkante aus dieser parallelen Ausrichtung herausbewegt wird und z.B. vom vorderen Ende des Werkzeugs nach hinten zu einen leicht konischen Verlauf hat. Es versteht sich, daß dies nur ein Beispiel für ein Werkzeug und einen besonderen Anwendungsfall der erfindungsgemäßen Verstelleinrichtung ist. Diese ist für alle möglichen Zerspanungswerkzeuge gleichermaßen gut geeignet, wobei die Verstellung sowohl in nur geringen Bereichen, z.B. Zehntelbereichen oder kleiner, z.B. zum Toleranzausgleich, als auch in größeren Maßbereichen erfolgen kann, z.B. gezielt zu Einstellzwecken. Ein weiterer wesentlicher Vorteil liegt darin,daß bei einer z.B. radialen Verstellung der Schneidplatte durch Drehverstellung des Exzenters die andere Einstellung der Schneidplatte, die durch die Raumlage der Längsachse des Exzenters vorgegeben ist, nicht verändert wird. Man kann also z.B. eine Durchmesserverstellung bei Werkzeug vornehmen, ohne daß sich die eingestellte Konizität verändert.

Weitere vorteilhafte Erfindungsmerkmale ergeben sich aus den Ansprüchen 2 - 28. Die Verstelleinrichtung ist außerordentlich einfach. Sie benötigt nur wenig Teile. Sie ermöglicht eine einfache Fertigung, erfordert nur wenig Platz im Werkzeug, so daß sie sich auch für Grundkörper mit kleinem Querschnitt noch gut eignet, und sie hat den Vorteil, daß sie schnell und einfach montierbar ist und eine schnelle, einfache und sichere Verstellung ermöglicht.

Eine eigenständige Lösung enthält Anspruch 29. Hierdurch ist eine Verstellung des Exzenters in Richtung seiner Längsachse möglich, wodurch ebenfalls der Verstellbereich derartiger Zerspanungswerkzeuge mit einfachen, kostengünstigen Mitteln wesentlich erweitert wird.

Weitere Einzelheiten und Vorteile der Erfindung ergeben sich aus der nachfolgenden Beschreibung.

Die Erfindung ist nachfolgend anhand eines in den Zeichnungen gezeigten Ausführungsbeispieles näher erläutert. Es zeigen:
- Fig. 1: eine schematische Seitenansicht eines Zerspanungswerkzeuges mit demontierter und seitlich daneben gezeigter Schneidplatte und Spannplatte dafür,
- Fig. 2 und 3: jeweils einen schematischen Schnitt entlang der Linie II - II bzw. III - III in Fig. 1,
- Fig. 4: eine vergrößerte, teilweise geschnittene Seitenansicht einer Einzelheit des Zerspanungswerkzeuges mit Schneidplatte,
- Fig. 5: eine vergrößerte Seitenansicht allein des Exzenters des Zerspanungswerkzeuges,
- Fig. 6: einen Schnitt entlang der Linie VI - VI des Exzenters in Fig. 5, in größerem Maßstab,
- Fig. 7: eine schematische Seitenansicht allein eines Stützkörpers,
- Fig. 8: einen schematischen Schnitt entlang der Linie VIII - VIII in Fig. 7, in größerem Maßstab.

In den Zeichnungen ist ein Zerspanungswerkzeug 10 gezeigt, das bei diesem Ausführungsbeispiel als beispielsweise einschneidiges Reibwerkzeug ausgebildet ist. Bei einem anderen, nicht gezeigten Ausführungsbeispiel ist das Zerspanungswerkzeug 10 statt dessen als Bohrwerkzeug, z.B. auch als Senkwerkzeug, oder als Fräswerkzeug od. dgl. gestaltet, wobei auch diese einschneidig oder mehrschneidig sein können. Da die Erfindung bei jeder Art Zerspanungswerkzeug 10 Anwendung finden kann und nicht auf den besonderen Typus dieses Werkzeugs eingeschränkt ist, kommt es letztlich nicht auf die spezielle Ausbildung des Zerspanungswerkzeugs 10 an.

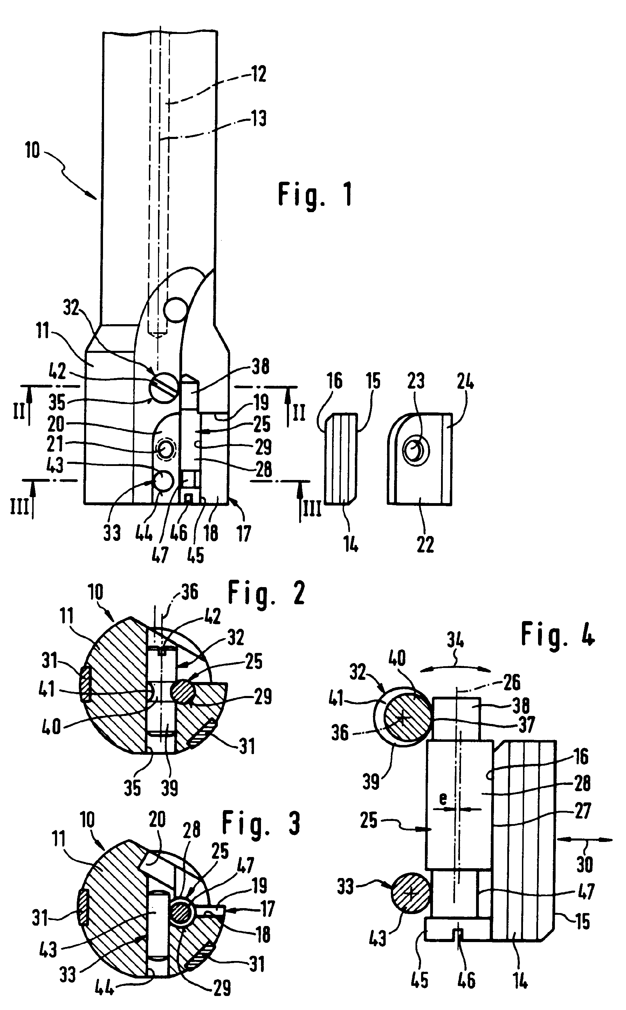

Das Zerspanungswerkzeug 10 hat einen Grundkörper 11 mit nur angedeutetem inneren Kühlmittelkanal 12, der beispielsweise im Zentrum und koaxial zur Längsmittelachse 13 angeordnet ist. In der Gestaltung als einschneidiges Zerspanungswerkzeug 10 ist dieses mit nur einer Schneidplatte 14 versehen. Beim gezeigten Ausführungsbeispiel ist die Schneidplatte 14 etwa rechteckig, wobei an den einander gegenüberliegenden längeren Seiten jeweils Schneiden 15 bzw. 16 ausgebildet sind. Die Schneidplatte 14 kann somit in der einen oder anderen Ausrichtung plaziert sein, in der eine der Schneiden 15 bzw. 16 sich in Fig. 1 außen befindet und für die zerspanende Bearbeitung wirksam ist. Dabei ist die Schneidplatte 14 so ausgerichtet, eingestellt und fixiert, daß diese jeweils außen befindliche Schneide 15 bzw. 16 nicht exakt parallel zur Längsmittelachse 13 verläuft, sondern zumindest schwach konisch, so daß deren in Fig. 1 untere Außenseite einen größeren Radialabstand als die in Fig. 1 obere Außenseite von der Längsmittelachse 13 hat, um beim Reiben ein Klemmen zu verhindern.

Wie bei derartigen Zerspanungswerkzeugen 10 üblich, ist am unteren Ende des Grundkörpers 11 ein Sitz 17 mit rückseitiger Anlagefläche 18 und oberer axialer Anlagefläche 19 für die Schneidplatte 14 geschaffen, die somit über die Anlagefläche 18 rückseitig und über die Anlagefläche 19 in axialer Richtung nach oben hin flächig abgestützt ist. Ferner ist in Fig. 1 links in Abstand vom Sitz 17 in üblicher Weise im Grundkörper 11 ein weiterer Sitz 20 vorgesehen mit Gewindebohrung 21. Der Sitz 20 ist für eine Spannplatte 22 bestimmt, die formschlüssig im Sitz 20 aufgenommen wird und mittels einer nicht gezeigten, eine Durchgangsbohrung 23 in der Spannplatte 22 durchsetzenden Schraube, die in die Gewindebohrung 21 eingreift, festspannbar ist, wobei die Spannplatte 22 in bezug auf die Ebene der Schneidplatte 14 unter einem spitzen Winkel verläuft und mit ihrem überstehenden Abschnitt 24 von oben her auf einem Flächenteil der Schneidplatte 14 aufliegt. Durch Festziehen der Schraube in der Gewindebohrung 21 und Festziehen der Spannplatte 22 wird somit die Schneidplatte 14 in ihrem Sitz 17 festgespannt, wie dies bei solchen Zerspanungswerkzeugen 10 üblich ist. Einfacher ist es, wenn die Spannplatte 22 entfällt und die Schneidplatte 14 direkt mittels einer diese durchsetzenden Schraube festgespannt wird,die in eine Gewindebohrung im Bereich des Sitzes 17 eingeschraubt wird. Auch dies liegt im Rahmen der Erfindung.

Bei einem anderen, nicht gezeigten Ausführungsbeispiel ist die mindestens eine Schneidplatte 14 in einem ihr eigenen Plattenhalter, auch als Kassette bezeichnet, fest gehalten, wobei dann dieser Plattenhalter so, wie sonst unmittelbar die Schneidplatte 14, in einem analogen Sitz 17 aufgenommen ist, wobei der Plattenhalter entweder in analoger Weise mittels einer Spannplatte festgespannt sein kann oder statt dessen unter Wegfall der Spannplatte 22 direkt mittels einer in eine analoge Gewindebohrung 21 eingreifenden Schraube, die eine Bohrung im Plattenhalter durchsetzt, festgeschraubt werden kann. Da derartiges bei solchen Zerspanungswerkzeugen 10 jeweils bekannt ist, bedarf dies keiner besonders eingehenden Beschreibung. Es versteht sich, daß die Erfindung in gleicher Weise sowohl für die beschriebene und gezeigte Aufnahme und Fixierung der mindestens einen Schneidplatte 14 als auch für die Version zur Anwendung kommen kann, bei der die jeweilige Schneidplatte in beschriebener Weise in einem Plattenhalter (Kassette) enthalten ist und letzterer am Grundkörper 11 angebracht ist.

Eine Besonderheit des Zerspanungswerkzeuges 10 liegt darin, daß die Schneidplatte 14 unmittelbar oder - wenn diese in einem Plattenhalter sitzt und der Plattenhalter im Grundkörper 11 aufgenommen wird -mittelbar einstellbar und feststellbar im Grundkörper 11 angeordnet ist. Hierzu ist ein Einstellelement in Form eines Exzenters 25 im Grundkörper 11 angeordnet, der um seine Längsachse 26 drehverstellbar ist. Der Begriff "Exzenter" beinhaltet jede mögliche Ausgestaltung derart, daß bei einer Drehbetätigung um die Längsachse 26 in der einen oder anderen Richtung der radiale Abstand der äußeren Umfangsfläche 27 von der Längsachse 26 zunimmt bzw. abnimmt. Zur Verdeutlichung ist bei der Darstellung in Fig. 4 beim Exzenter 25 dessen mittlerer Exzenterteil 26 mit einer zeichnerisch übertrieben dargestellten Exzentrizität e gezeigt. Diese kann bereits dadurch verwirklicht sein, daß die äußere Umfangsfläche 27 z.B. etwa einer Spirale folgt und dadurch die Exzentrizität e im Bereich des mittleren Exzenterteils 28 geschaffen ist.

Der Exzenter 25 ist bolzenförmig und innerhalb einer längsgerichteten, daran angepaßten Aufnahme 29 des Grundkörpers 11 enthalten, wobei die Aufnahme 29 hier z.B. etwa parallel zur Längsmittelachse 13 ausgerichtet ist. Beim gezeigten Ausführungsbeispiel liegt der Exzenter 25 mit seinem mittleren Exzenterteil 28 an der in Fig. 1 links befindlichen Seite der Schneidplatte 14 im zusammengebauten Zustand an, wobei der Exzenter 25 die Schneidplatte 14 in bezug auf den Grundkörper 11 abstützt. Beim gezeigten Ausführungsbeispiel erfolgt die Abstützung etwa in radialer Richtung, genau genommen hier z.B. in Richtung einer Sekante.

Ist die Schneidplatte 14 in einem zugeordneten Plattenhalter (Kassette) enthalten, so kann dieser Plattenhalter in Anpassung an den Exzenter 25 eine der Aufnahme 29 zugeordnete und angepaßte Aufnahme enthalten, in der dann der Exzenter 25 enthalten ist, der sich dann bei seiner Drehverstellung an einer Fläche im Grundkörper 11 abstützt.

Beim gezeigten Ausführungsbeispiel mit längsgerichtetem Exzenter 25 ermöglicht dieser somit eine radiale Einstellung und Verstellung der Schneidplatte 14. Bei einem anderen, nicht gezeigten Ausführungsbeispiel kann in analoger Weise ein Exzenter in einer quer, z.B. etwa rechtwinklig, zur Längsmittelachse 13 des Grundkörpers 11 gerichteten Aufnahme des Grundkörpers 11 und/oder eines Plattenhalters (Kassette), der eine Schneidplatte trägt, lagern. Mittels eines solchen quergerichteten Exzenters wäre dann eine etwa axiale Verstellung der Schneidplatte 14 unmittelbar oder, wenn diese in einem Plattenhalter enthalten ist, durch Verstellung des Plattenhalters mittelbar möglich. Es versteht sich, daß auch beide Verstellmöglichkeiten in einem einzigen Zerspanungswerkzeug integriert sein können, das dann entsprechend dem gezeigten Ausführungsbeispiel einen längsgerichteten Exzenter 25 zur radialen Verstellung und zusätzlich dazu einen quergerichteten Exzenter zur axialen Verstellung aufweist. Zur Verdeutlichung ist in Fig. 4 die radiale Verstellrichtung mit einem Pfeil 30 angezeigt.

Das gezeigte Zerspanungswerkzeug 10 weist zusätzlich zur Schneidplatte 14 zwei in Umfangsrichtung versetzt angeordnete Führungsleisten 31 auf.

Eine weitere wesentliche Besonderheit des Zerspanungswerkzeuges 10 liegt in folgendem. Der Exzenter 25 ist seinerseits quer zu seiner Längsachse 26 verstellbar im Grundkörper 11 gehalten. Er ist dazu mittels zweier Stützkörper 32 und 33 am Grundkörper 11 abgestützt, wobei zumindest der eine, in Fig. 1 und 4 oben befindliche Stützkörper 32 derart im Grundkörper 11 verstellbar aufgenommen ist, daß dieser Stützkörper 32 am Exzenter 25 angreift und diesen verstellen kann, z.B. so, daß sich für den Exzenter 25 eine Verstellung entlang dem bogenförmigen Pfeil 34 ergibt. Eine solche Verstellung des Exzenters 25 mit diesem in Fig. 4 oberen Ende in Richtung des Bogens gemäß Pfeil 34 hat zur Folge, daß die eine Schneide 15 der Schneidplatte 14, die sich außen befindet und die Zerspanung bewirken kann, aus der Parallelität zur Längsmittelachse 13 heraus zur einen oder anderen Richtung schräg verstellt wird. Es läßt sich somit die Konizität der Schneide 15, bezogen auf die Längsmittelachse 13, verstellen und auf die gewünschte Größe einstellen. Analoges ergibt sich für einen Exzenter, der z.B. der axialen Verstellung dient und in gleicher Weise mittels Stützkörpern abgestützt und bezüglich der Raumlage seiner Längsachse verstellbar ist.

Der mindestens eine, den Exzenter 25 verstellbar abstützende Stützkörper 32 ist in bezug auf den Exzenter 25 und dessen Längsachse 26 etwa radial gerichtet, wie insbesondere Fig. 2 erkennen läßt. Genauer betrachtet, ist dieser erste Stützkörper 32 längs einer Sekante gerichtet. Er ist als Bolzen ausgebildet und in einer Aufnahme 35 in Form einer Bohrung des Grundkörpers 11 um die Längsachse 36 drehbar und verstellbar gelagert. Wie ferner sichtbar ist, ist die Anordnung so getroffen, daß der radial oder längs einer Sekante gerichtete erste Stützkörper 32 etwa tangential zum Exzenter 25 verläuft, wobei beide zusammen in kreuzförmiger Anlage stehen, wie insbesondere Fig. 2 zeigt. Mit seiner Außenfläche 37 liegt dieser erste Stützkörper 32 an der Außenfläche des Exzenters 25 an, und zwar bei der besonderen Ausführungsform im Bereich eines vorzugsweise etwa zylindrischen Abschnittes 38 des Exzenters 25, der auf einer Axialseite vom etwa mittleren Exzenterteil 28 abstrebt und einen demgegenüber reduzierten Außendurchmesser hat. Der erste Stützkörper 32 ist als verstellbares, zumindest in etwa nockenförmiges Verstellelement 39 gestaltet. Dieses Verstellelement 39 weist an geeigneter Stelle, z.B. etwa im Bereich der Längenmitte, umfangsseitig einen Exzenterteil 40 auf, der am Exzenter 25 zu dessen Querverstellung in Pfeilrichtung 34 anliegt, und zwar im besonderen an dessen Abschnitt 38. Das Verstellelement 39 weist im Bereich seines Exzenterteils 40 eine z.B. umlaufende Nut 41 auf, deren Querschnitt bogenförmig oder in nicht gezeigter Weise U-förmig ist. In die Nut 41 greift im Kreuzungsbereich mit dem Exzenter 25 dessen Abschnitt 38 unter formschlüssiger Sicherung des Verstellelements 39 in dessen Längsrichtung ein. Der erste Stützkörper 32 ist somit durch diesen einfachen Formschluß verliersicher innerhalb der Aufnahme 35 gehalten. Am in Fig. 2 z.B. oberen Ende hat der erste Stützkörper 32 eine Werkzeugangriffsfläche 42, z.B. einen Schlitz, so daß der erste Stützkörper 32 von außen innerhalb der Aufnahme 35 gut erreichbar und leicht um seine Längsachse 36 drehverstellbar ist.

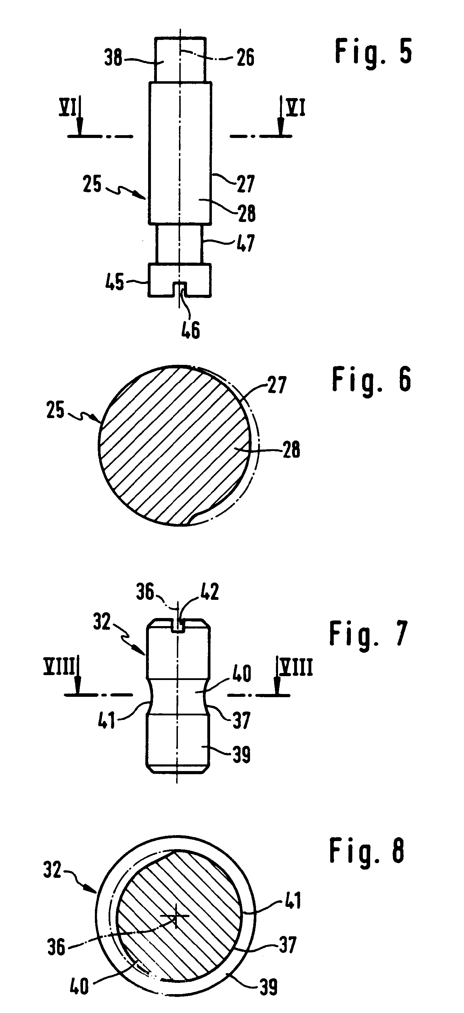

Beim ersten Stützkörper 32 ist dessen Außenfläche 37 des Exzenterteils 40, die mit dem Abschnitt 38 des Exzenters 25 in Berührung steht, in Umfangsrichtung so gestaltet, daß sich die gewünschte Exzentrizität ergibt. Z.B. ist diese Außenfläche 37, die zugleich den Grund der Nut 41 bildet, einer Spirale folgend gestaltet und auf diese Weise die Exzentrizität geschaffen. Dies ist in Fig. 4 und Fig. 8 verdeutlicht.

Wie erläutert, ist die Verstelleinrichtung für die mindestens eine Schneidplatte 14 mit zumindest zwei Stützkörpern 32, 33 versehen, von denen zumindest einer, beim gezeigten Ausführungsbeispiel der erste Stützkörper 32, als Verstellelement 39 beschriebener Art ausgebildet ist. Beide Stützkörper 32, 33 sind entlang der Längsachse 26 des Exzenters 25 in Abstand voneinander plaziert.

Bei einem nicht gezeigten Ausführungsbeispiel ist der zweite Stützkörper 33 ebenfalls als verstellbares Verstellelement und entsprechend dem ersten Stützkörper 32 ausgebildet.

Beim dargestellten Ausführungsbeispiel ist der in Fig. 4 unterhalb des ersten Stützkörpers 32 angeordnete zweite Stützkörper 33 allein als Lagerkörper vorgesehen ,wobei dieser zugleich die axiale Verliersicherung für den Exzenter 25 innerhalb der Aufnahme 29 bildet. Der zweite Stützkörper 33 ist als z.B. etwa zylindrischer Bolzen 43 gestaltet und in einer Bohrung 44 des Grundkörpers 11 verschiebesicher gehalten. In diesem Bereich, wo der zweite Stützkörper 33 am Exzenter 25 in Kreuzlage anliegt,hat der Exzenter 25 auf einem endseitigen und wie der Exzenterteil 28 exzentrischen Abschnitt 45 eine z.B. umlaufende und zentrische Nut 47 mit U-förmigem Querschnitt, in die im Kreuzungsbereich der zweite Stützkörper 33 unter formschlüssiger Sicherung des Exzenters 25 in Richtung seiner Längsachse 26 eingreift.Der Abschnitt 45,der sich in Fig. 1, 4 und S unten befindet,dient ebenfalls der Abstützung der Schneidplatte 12. Er weist eine Werkzeugangriffsfläche 46,z.B. einen Schlitz, auf, über den der Exzenter 25 mit einem Werkzeug zu Verstellzwecken leicht und feinfühlig drehbar ist. Der Nutgrund der Nut 47 verläuft, bezogen auf die Längsachse 26,z.B. kreisförmig, ebenso die äußere Umfangsfläche des etwa zylindrischen Abschnitts 38 am gegenüberliegenden Ende. Dagegen ist der endseitige Abschnitt und der mittlere Exzenterteil 28 bezogen auf die Längsachse 26 exzentrisch,z.B. dadurch, daß deren gemeinsame Umfangsfläche 27 etwa einer Spirale folgt und dadurch die Exzentrizität e geschaffen ist. Statt dessen kann der Abschnitt 45 auch zentrisch sein, wobei er dann aber nicht zur Abstützung der Schneidplatte 12 beitragen kann.

Bei der Montage geht man wie folgt vor. Zunächst wird der erste Stützkörper 32 in die Aufnahme 35 eingesteckt. Danach kann der stiftförmige Exzenter 25 in die ihm zugeordnete Aufnahme 29 in den Grundkörper 11 eingeschoben werden, und zwar in Fig. 1 von unten her, soweit, bis der Abschnitt 38 in den Bereich der Nut 41 des ersten Stützkörpers 32 gelangt. Ist dieser Formschluß zwischen beiden hergestellt, ist der erste Stützkörper 32 in der Aufnahme 35 axial verliersicher gehalten. Anschließend daran kann dann der zweite Stützkörper 33 in die Bohrung 44 eingesteckt werden. Sobald der zweite Stützkörper 33 dabei den Exzenter 25 im Bereich der Nut 47 kreuzt und formschlüssig in die Nut 47 eingreift, ist der Exzenter 25 axial ebenfalls verliersicher gehalten. Man muß also lediglich den zweiten Stützkörper 33 in Form des Bolzens 43 innerhalb der Bohrung 44 gegen Verschiebung sichern, wodurch dann der gesamte Verstellmechanismus ohne weitere notwendige Maßnahmen verliersicher gehalten ist. Besondere zusätzliche Elemente sind dafür nicht notwendig. Die Verliersicherung des ersten Stützkörpers 32 und des Exzenters 25 ist also besonderes einfach und kostengünstig. Sie bedingt nur wenig Teile und ist komplikationslos. Von Vorteil ist ferner eine schnelle Montierbarkeit und Demontierbarkeit. Bei allem ist der Exzenter 25 im Bereich seiner Werkzeugangriffsfläche 46 gut und jederzeit in Fig. 1 von unten her zu Verstellzwecken erreichbar. Gleichermaßen ist auch der erste Stützkörper 32, und zwar dessen Werkzeugangriffsfläche 42, jederzeit bedarfsweise in der Aufnahme 35 zu Verstellzwecken erreichbar. Die Verstellung der Schneidplatte 14 in Pfeilrichtung 30 und/oder in Pfeilrichtung 34, die über eine entsprechende Verstellung des Exzenters 25 mit Hilfe des ersten Stützkörpers 32 geschieht, läßt sich schnell, einfach und sehr feinfühlig bewerkstelligen. Es sind keine besonderen Spezialwerkzeuge notwendig, ebenso wenig besondere Fachkenntnis.

Soll z.B. die Schneidplatte 14 in Pfeilrichtung 30 gemäß Fig. 4 weiter radial nach außen verstellt werden, so braucht dazu die auf die Schneidplatte 14 über die Spannplatte 22 wirkende Klemmkraft nicht durch Lockern der Schraube in der Gewindebohrung 21 reduziert zu werden, sondern es kann gleich mit einem Schraubendreher in den Schlitz 46 des Exzenters 25 eingegriffen und dieser in entsprechender, sinnfälliger Weise um die Längsachse 26 gedreht werden, mit zunehmender-Exzentrizität seiner äußeren Umfangsfläche 27, bezogen auf die Längsachse 26. Dadurch wird die Schneidplatte 14 radial weiter nach außen verschoben. Aufgrund der wirkenden Selbsthemmung ist der Exzenter 25 gehindert, sich selbsttätig in ungewünschter Weise um die Längsachse 26 zu verstellen, so daß immer die jeweilige Einstellung erhalten bleibt

Soll die Konizität verändert werden, insbesondere z.B. das untere äußere Ende der wirksamen Schneide 15 radial weiter vorstehen als das obere äußere Ende der Schneide 15 der Schneidplatte 14, so wird wie folgt vorgegangen. Ohne die in die Gewindebohrung 21 eingeschraubte Schraube lockern zu müssen, läßt sich der erste Stützkörper 32 durch Angriff z.B. mit einem Schraubendreher am Schlitz 42 um seine Längsachse 36 in der jeweils erforderlichen Richtung so drehen, daß aufgrund der je nach Drehrichtung zunehmenden bzw. abnehmenden Exzentrizität im Bereich der Nut 41 der Abschnitt 38 des Exzenters 25 in Richtung des Bogenpfeils 34, und zwar in Fig. 4 nach links hin, verstellt wird. Da man dabei auf die Schneidplatte 14 von außen her drückt, folgt die Schneidplatte 14 dieser Bewegung. Der in axialem Abstand plazierte andere Stützkörper 33 bildet dabei eine Abstützung für den Exzenter 25 und Stützlagerung, so daß in diesem Kreuzungsbereich keine Verstellbewegung des Exzenters 25 geschieht.

Das Zerspanungswerkzeug 10 mit der beschriebenen Verstelleinrichtung ist einfach und kostengünstig. Da die Verstelleinrichtung nur wenig Einzelelemente hat, ist diese simpel, ebenfalls kostengünstig und schnell, einfach und sicher zu handhaben. Sie ermöglicht eine dementsprechende Verstellung und Einstellung der mindestens einen Schneidplatte 14. Dabei versteht es sich, daß die Einstellbewegungen z.B. zum Ausgleich von Fertigungstoleranzen im Zehntelbereich liegen können, statt dessen aber auch je nach Einsatzzweck in größeren oder kleineren Maßbereichen liegen können. Die Anpassung kann durch einfachen Austausch des Exzenters 25 und/oder der Stützkörper 32, 33 vorgenommen werden.

Bei einem anderen, nicht gezeigten Ausführungsbeispiel ist als Lösung vorgesehen, daß der Exzenter 25 in Richtung seiner Längsachse 26 seinerseits verstellbar gehalten ist und insbesondere im Bereich des mittleren Exzenterteils 28, der an der Schneidplatte 14 rückseitig anliegt, eine in einer Richtung seiner Längsachse abnehmende Exzentrizität dieses Exzenterteils 28 aufweist, wobei diese Verstellbarkeit nach dem gleichen, beschriebenen Prinzip mittels z.B. eines Stützkörpers erfolgen kann, der auf das in Fig. 4 obere Stirnende des Exzenters 25 drückt und ansonsten z.B. dem ersten Stützkörper 32 entsprechend gestaltet ist. Durch axiale Verstellung des Exzenters 25 verschiebt sich somit axial dessen mittlerer Exzenterteil, was aufgrund der in einer Richtung der Längsachse abnehmenden Exzentrizität eine Veränderung des radialen Stützabstandes, bezogen auf die Schneidplatte 14, zur Folge hat, deren Position dadurch veränderbar ist.

Bei einem anderen, nicht gezeigten Ausführungsbeispiel ist der mindestens eine, den Exzenter 25 verstellbar abstützende Stützkörper nicht radial oder längs einer Sekante angeordnet , sondern er verläuft statt dessen etwa parallel zum Exzenter 25 und zu dessen Längsachse 26. Ein solcher Stützkörper liegt dann mit seiner Außenfläche, z.B. spiralförmig verlaufenden Umfangsfläche, an der Außenfläche z.B. des Abschnitts 38 des Exzenters 25 an. Bezogen auf Fig. 4 bedeutet dies, daß bei diesem, nicht gezeigten Ausführungsbeispiel die Längsachse 36 des ersten Stützkörpers 32 nicht, wie in Fig. 4, rechtwinklig zur Zeichenebene und quer zur Längsachse 26 verläuft, sondern statt dessen innerhalb der Zeichenebene und parallel zur Längsachse 26. Auch mit einem solchen, etwa achsparallelen Stützkörper mit Exzenterfläche ist eine Verstellung des Exzenters 25 in Richtung des Bogenpfeiles 34 mit einfachen Mitteln möglich.

Bei einem anderen, ebenfalls nicht gezeigten Ausführungsbeispiel verläuft der mindestens eine Stützkörper 32 oder 33 zwar so, wie gezeigt, radial oder längs einer Sekante. Anders als gezeigt und beschrieben, kreuzt jedoch dieser mindestens eine Stützkörper den Exzenter 25 nicht, sondern er stößt mit einem Ende am Exzenter 25 an. In einem solchen Fall sollten sich die Längsachse 26 des Exzenters 25 und die Längsachse des mindestens einen Stützkörpers schneiden, anstatt - wie beim gezeigten und beschriebenen Ausführungsbeispiel - ohne Schnittpunkt in Abstand voneinander zu verlaufen. Bei einem solchen Ausführungsbeispiel könnte der mindestens eine radial oder längs einer Sekante gerichtete Stützkörper als Gewindebolzen ausgebildet und in einer entsprechenden Gewindebohrung im Grundkörper 11 drehverstellbar gehalten sein. In gleicher Weise wäre bei diesem nicht gezeigten Ausführungsbeispiel auch der in Axialabstand plazierte zweite Stützkörper ausgebildet. Somit wäre der Exzenter 25 in axialem Abstand an zwei Stellen quer abgestützt, wobei die Abstützkräfte in diesen Fällen in Richtung einer zur Längsachse 26 Radialen gerichtet wären.

Ein weiterer, wesentlicher Vorteil liegt darin, daß bei einer z.B. radialen Verstellung der Schneidplatte durch Drehverstellung des Exzenters die andere Einstellung der Schneidplatte, die durch die Raumlage der Längsachse des Exzenters vorgegeben ist, nicht verändert wird. Man kann also z.B. eine Durchmesserverstellung beim Werkzeug vornehmen, ohne daß sich die eingestellte Konizität verändert. Dies liegt daran, daß bei der Drehverstellung des Exzenters 25 dessen Längsachse 26 mittels der Stützkörper 32, 33 in der vorgegebenen Position verbleibt, wodurch z.B. die Konizität bestimmt wird.

## Patentansprüche

1. Zerspanungswerkzeug, mit einem Grundkörper (11), in dem unmittelbar oder - über einen Plattenhalter - mittelbar zumindest eine Schneidplatte (14) einstellbar und feststellbar angeordnet ist, und mit einem um seine Längsachse (26) drehverstellbaren Exzenter (25), der an der Schneidplatte (14) bzw. dem Plattenhalter anliegt und letztere (14) bzw. letzteren in bezug auf den Grundkörper (11) abstützt, **dadurch gekennzeichnet,** daß der Exzenter (25) seinerseits quer zu seiner Längsachse (26) verstellbar gehalten ist.

2. Zerspanungswerkzeug nach Anspruch 1, **dadurch gekennzeichnet,** daß der Exzenter (25) mittels mindestens eines Stützkörpers (32, 33) am Grundkörper (11) abgestützt ist, wobei der mindestens eine Stützkörper (32, 33) im Grundkörper (11) derart verstellbar aufgenommen ist, daß dieser (32, 33) am Exzenter (25) angreift und diesen verstellen kann.

3. Zerspanungswerkzeug nach Anspruch 2, **dadurch gekennzeichnet,** daß der mindestens eine den Exzenter (25) verstellbar abstützende Stützkörper etwa parallel zum Exzenter (25) und zu dessen Längsachse (26) gerichtet ist und an diesem mit seiner Außenfläche anliegt.

4. Zerspanungswerkzeug nach Anspruch 2, **dadurch gekennzeichnet,** daß der mindestens eine den Exzenter (25) verstellbar abstützende Stützkörper (32, 33) in bezug auf den Exzenter (25) und dessen Längsachse (26) etwa radial oder längs einer Sekante gerichtet ist.

5. Zerspanungswerkzeug nach Anspruch 4, **dadurch gekennzeichnet,** daß der radial oder längs einer Sekante gerichtete mindestens eine Stützkörper (32, 33) mit einem Ende am Exzenter (25) aufstößt.

6. Zerspanungswerkzeug nach Anspruch 4, **dadurch gekennzeichnet,** daß der mindestens eine radial oder längs einer Sekante gerichtete Stützkörper (32, 33) etwa tangential zum Exzenter (25) verläuft.

7. Zerspanungswerkzeug nach Anspruch 6, **dadurch gekennzeichnet,** daß der mindestens eine, zum Exzenter (25) tangentiale Stützkörper (32, 33) und der Exzenter (25) zusammen in kreuzförmiger Anlageberührung stehen.

8. Zerspanungswerkzeug nach Anspruch 6 oder 7, **dadurch gekennzeichnet,** daß der mindestens eine zum Exzenter (25) etwa tangentiale Stützkörper (32, 33) mit seiner Außenfläche (37) an der Außenfläche (39, 47) des Exzenters (25) anliegt.

9. Zerspanungswerkzeug nach einem der Ansprüche 2 - 8, **gekennzeichnet durch** zwei Stützkörper (32, 33), die entlang der Längsachse (26) des Exzenters (25) in Abstand voneinander angeordnet sind.

10. Zerspanungswerkzeug nach Anspruch 9, **dadurch gekennzeichnet,** daß zumindest einer der beiden Stützkörper (32, 33) seinerseits als verstellbares, etwa nockenförmiges Verstellelement (39) ausgebildet ist.

11. Zerspanungswerkzeug nach Anspruch 10, **dadurch gekennzeichnet,** daß das Verstellelement (39) umfangsseitig einen Exzenterteil (40) aufweist, der am Exzenter (25, 38) zu dessen Querverstellung anliegt.

12. Zerspanungswerkzeug nach Anspruch 10 oder 11, **dadurch gekennzeichnet,** daß das Verstellelement (39) als Bolzen ausgebildet ist, der in einer Aufnahme (35), insbesondere Bohrung, des Grundkörpers (11) um seine Längsachse (36) drehbar und verstellbar gelagert ist.

13. Zerspanungswerkzeug nach einem der Ansprüche 10 - 12, **dadurch gekennzeichnet,** daß das Verstellelement (39) im Bereich seines Exzenterteils (40) eine z.B. umlaufende Nut (41) aufweist, in die im Kreuzungsbereich ein vorzugsweise etwa zylindrischer Abschnitt (38) des Exzenters (25) unter formschlüssiger Sicherung des Verstellelements (39) in dessen Längsrichtung eingreift.

14. Zerspanungswerkzeug nach Anspruch 13, **dadurch gekennzeichnet,** daß die Nut (41) im Querschnitt bogenförmig ist.

15. Zerspanungswerkzeug nach Anspruch 13 oder 14, **dadurch gekennzeichnet,** daß der vorzugsweise etwa zylindrische Abschnitt (38) des Exzenters (25) dessen einer Endabschnitt ist, der auf einer Axialseite vom etwa mittleren Exzenterteil (28) abstrebt.

16. Zerspanungswerkzeug nach einem der Ansprüche 13 - 15, **dadurch gekennzeichnet,** daß der vorzugsweise etwa zylindrische Abschnitt (38) einen reduzierten Außendurchmesser hat.

17. Zerspanungswerkzeug nach einem der Ansprüche 2 - 16, **dadurch gekennzeichnet,** daß ein zweiter Stützkörper (33) an einem vorzugsweise exzentrischen Abschnitt (45) am Ende des mittleren Exzenterteils (28) anliegt.

18. Zerspanungswerkzeug nach Anspruch 17, **dadurch gekennzeichnet,** daß der vorzugsweise exzentrische Abschnitt (45) des Exzenters (25)eine vorzugsweise zentrische und z.B. umlaufende Nut (47) enthält, in die im Kreuzungsbereich der zweite Stützkörper (33) unter formschlüssiger Sicherung des Exzenters (25) in Richtung seiner Längsachse (26) eingreift.

19. Zerspanungswerkzeug nach Anspruch 18, **dadurch gekennzeichnet,** daß die Nut (47) des Exzenters (25) im Querschnitt U-förmig ist.

20. Zerspanungswerkzeug nach einem der Ansprüche 17 - 19, **dadurch gekennzeichnet,** daß der zweite Stützkörper (33) analog dem ersten Stützkörper (32) als verstellbares, etwa nockenförmiges Verstellelement ausgebildet ist.

21. Zerspanungswerkzeug nach einem der Ansprüche 17 - 19, **dadurch gekennzeichnet,** daß der zweite Stützkörper (33) als etwa zylindrischer Bolzen (43) ausgebildet ist, der in einer Bohrung (44) des Grundkörpers (11) verschiebesicher gehalten ist.

22. Zerspanungswerkzeug nach einem der Ansprüche 1 - 21, **dadurch gekennzeichnet,** daß die Umfangsfläche (27) des mittleren Exzenterteils (28)und des vorzugsweise exzentrischen Abschnitts (45)des Exzenters (25)etwa einer Spirale folgt und dadurch die Exzentrizität (3) des Exzenters (25) geschaffen ist.

23. Zerspanungswerkzeug nach einem der Ansprüche 11 - 22, **dadurch gekennzeichnet,** daß die Außenfläche (37) des Exzenterteils (40) des Verstellelements (39) etwa einer Spirale folgt und dadurch die Exzentrizität geschaffen ist.

24. Zerspanungswerkzeug nach einem der Ansprüche 1 - 23, **dadurch gekennzeichnet,** daß der Exzenter (25) innerhalb einer längsgerichteten, z.B. etwa parallel zur Längsmittelachse (13) des Grundkörpers (11) verlaufenden, Aufnahme (29) des Grundkörpers (11) und/oder des Plattenhalters, der eine Schneidplatte trägt, lagert.

25. Zerspanungswerkzeug nach einem der Ansprüche 1 - 23, **dadurch gekennzeichnet,** daß der Exzenter (25) innerhalb einer quer, z.B. etwa rechtwinklig, zur Längsmittelachse (13) des Grundkörpers (11) gerichteten Aufnahme des Grundkörpers (11) und/oder des Plattenhalters, der eine Schneidplatte trägt, lagert.

26. Zerspanungswerkzeug nach Anspruch 24 oder 25, **gekennzeichnet durch** einen längsgerichteten Exzenter (25) zur z.B. radialen Verstellung und einen quergerichteten Exzenter zur z.B. axialen Verstellung.

27. Zerspanungswerkzeug nach einem der Ansprüche 1 - 26, **gekennzeichnet durch** die Ausbildung als vorzugsweise einschneidiges Reibwerkzeug.

28. Zerspanungswerkzeug nach einem der Ansprüche 1 - 26, **gekennzeichnet durch** die Ausbildung als Bohr- oder Fräswerkzeug.

29. Zerspanungswerkzeug, mit einem Grundkörper (11), in dem unmittelbar oder - über einen Plattenhalter - mittelbar zumindest eine Schneidplatte (14) einstellbar und feststellbar angeordnet ist, und mit einem um seine Längsachse (26) drehverstellbaren Exzenter (25), der an der Schneidplatte (14) bzw. dem Plattenhalter anliegt und letztere (14) bzw. letzteren in bezug auf den Grundkörper (11) abstützt,
**dadurch gekennzeichnet,**
daß der Exzenter (25) in Richtung seiner Längsachse (26) seinerseits verstellbar gehalten ist und eine in einer Richtung seiner Längsachse (26) abnehmende Exzentrizität (e) seines Exzenterteils (28) aufweist.

## Claims

1. A metal-cutting tool with a basic body (11) in which at least one cutter plate (14) is adjustably and lockably disposed directly or - via a plate-holder - indirectly, and with, rotatable about its longitudinal axis (26), an eccentric member (25) which bears on the cutter plate (14) or the plate holder, as the case may be, and braces the latter (14) or the plate-holder in respect of the basic body (11), characterised in that the eccentric member (25) is in turn supported for displacement cross-wise to its longitudinal axis (26).

2. A metal-cutting tool according to Claim 1, characterised in that the eccentric member (25) is, by means of at least one bracing member (32, 33) braced on the basic body (11), the at least one bracing member (32, 33) being so displaceably accommodated in the basic body (11) that said body (32, 33) engages and is able to adjust the eccentric member (25).

3. A metal-cutting tool according to Claim 2, characterised in that the at least one bracing member which adjustably supports the eccentric member (25) is directed substantially parallel with the eccentric member (25) and its longitudinal axis (26) while its outer surface bears thereon.

4. A metal-cutting tool according to Claim 2, characterised in that the at least one bracing member (32, 33) which adjustably supports the eccentric member (25) is directed substantially radially of or lengthwise of a secant on the eccentric member (25) and its longitudinal axis (26).

5. A metal-cutting tool according to Claim 4, characterised in that the at least one bracing member (32, 33) which is directed radially of or along a secant has one end which strikes the eccentric member (25).

6. A metal-cutting tool according to claim 4, characterised in that the at least one bracing member (32, 33) which is directed radially or along a secant extends substantially tangentially in relation to the eccentric member (25).

7. A metal-cutting tool according to Claim 6, characterised in that the at least one bracing member (32, 33) which is tangential in respect of the eccentric member (25) and the eccentric member (25) are in cruciform bearing contact with each other.

8. A metal-cutting tool according to Claim 6 or 7, characterised in that the at least one bracing member (32, 33) which is substantially tangential in relation to the eccentric member (25) has its outer surface (37) bearing on the outer surface (39, 47) of the eccentric member (25).

9. A metal-cutting tool according to one of Claims 2 to 8, characterised by two bracing members (32, 33) which are disposed at a distance from each other along the longitudinal axis (26) of the eccentric member (25).

10. A metal-cutting tool according to Claim 9, characterised in that at least one of the two bracing members (32, 33) is for its part constructed as an adjustable substantially cam-shaped adjusting element (39).

11. A metal-cutting tool according to Claim 10, characterised in that the adjusting element (39) has on its periphery an eccentric part (40) which bears on the eccentric member (25, 38) to produce its transverse displacement.

12. A metal-cutting tool according to Claim 10 or 11, characterised in that the adjusting element (39) is constructed as a bolt which is mounted for displacement in a housing (35), particularly a bore, in the basic body (11) and is adapted to rotate about its longitudinal axis (36).

13. A metal-cutting tool according to one of Claims 10 to 12, characterised in that the adjusting element (39) has in the region of its eccentric part (40) a for example encircling groove (41) engaged in the area of intersection by a preferably substantially cylindrical portion (38) of the eccentric member (35) so that the adjusting element (39) is form-lockingly secured in its longitudinal direction.

14. A metal-cutting tool according to Claim 13, characterised in that the groove (41) is of arcuate cross-section.

15. A metal-cutting tool according to Claim 13 or 14, characterised in that the preferably substantially cylindrical portion (38) of the eccentric member (25) is an end portion which on one axial side extends away from the substantially central part (28) of the eccentric member.

16. A metal-cutting tool according to one of Claims 13 to 15, characterised in that the preferably substantially cylindrical portion (38) has a reduced outside diameter.

17. A metal-cutting tool according to one of Claims 2 to 16, characterised in that a second bracing member (33) bears on a preferably eccentric portion (45) at the end of the middle part (28) of the eccentric member.

18. A metal-cutting tool according to Claim 17, characterised in that the preferably eccentric portion (45) of the eccentric member (25) comprises a preferably centrally disposed and for example encircling groove (47) which, in the area of the intersection, is engaged by the second bracing member (33), form-lockingly securing the eccentric member (25) in the direction of its longitudinal axis.

19. A metal-cutting tool according to Claim 18, characterised in that the groove (47) in the eccentric member (25) is of U-shaped cross-section.

20. A metal-cutting tool according to one of Claims 17 to 19, characterised in that the second bracing member (33), like the first bracing member (32), is constructed as an adjustable substantially cam-shaped adjusting element.

21. A metal-cutting tool according to one of Claims 17 to 19, characterised in that the second bracing member (33) is constructed as a substantially cylindrical bolt (43) which is supported and is non-displaceable in a bore (44) in the basic body (11).

22. A metal-cutting tool according to one of Claims 1 to 21, characterised in that the peripheral surface (27) of the middle part (28) of the eccentric member and of the preferably eccentric portion (45) of the eccentric member (25) substantially follows a spiral so creating the eccentricity (3) of the eccentric member (25).

23. A metal-cutting tool according to one of Claims 11 to 22, characterised in that the outer surface (37) of the eccentric member (40) of the adjusting element (39) substantially follows a spiral so that the eccentricity is created.

24. A metal-cutting tool according to one of Claims 1 to 23, characterised in that the eccentric member (25) is mounted inside a housing (29) which is longitudinally orientated, e.g. extends substantially parallel with the longitudinal central axis (13) of the basic body (11), the housing (29) being disposed in the basic body (11) and/or the plate-holder which carries a cutter plate.

25. A metal-cutting tool according to one of Claims 1 to 23, characterised in that the eccentric member (25) is mounted inside a housing in the basic body (11) and/or the plate-holder which carries a cutter plate, the housing extending cross-wise, e.g. substantially at a right-angle to the longitudinal central axis (13) of the basic body (11).

26. A metal-cutting tool according to Claim 24 or 25, characterised in that a longitudinally orientated eccentric member (25), for instance for radial adjustment and a transversely directed eccentric member for instance for axial adjustment.

27. A metal-cutting tool according to one of Claims 1 to 26, characterised by its being constructed as a preferably single-edged friction tool.

28. A metal-cutting tool according to one of Claims 1 to 26, characterised in that its being constructed as a drilling or milling-cutting tool.

29. A metal-cutting tool with a basic body (11) in which at least one cutter plate (14) is adjustably and lockably disposed directly or - via a plate-holder - indirectly and with, rotatable about its longitudinal axis (26), an eccentric member (25) which bears on the cutter plate (14) or plate-holder, bracing the latter (14) or the plate-holder in respect of the basic body (11), characterised in that the eccentric member (25) is displaceably supported in the direction of its longitudinal axis (26) and has, diminishing in a direction of its longitudinal axis (26), an eccentricity (e) in its eccentric part (28).

## Revendications

1. Outil d'usinage par enlèvement de copeaux, comprenant un corps de base (11) dans lequel est disposée au moins une plaquette de coupe (14) pouvant être réglée directement ou indirectement - par l'intermédiaire d'un support de plaquette - et bloquée, et un excentrique (25) pouvant être tourné autour de son axe longitudinal (26), qui est appliqué contre la plaquette de coupe (14) et respectivement contre le support de plaquette et soutient cette dernière (14) ou ce dernier par rapport au corps de base (11), **caractérisé en ce** que l'excentrique (25) est à son tour maintenu de manière à pouvoir être réglé transversalement par rapport à son axe longitudinal (26).

2. Outil d'usinage par enlèvement de copeaux selon la revendication 1, caractérisé en ce que l'excentrique (25) s'appuie au moyen d'au moins un corps d'appui (32, 33) sur le corps de base (11), au moins l'un des corps d'appui (32, 33) étant monté dans le corps de base (11) de façon à pouvoir être déplacé de telle façon que ledit corps d'appui (32, 33) entre en contact avec l'excentrique (25) et peut déplacer celui-ci.

3. Outil d'usinage par enlèvement de copeaux selon la revendication 2, caractérisé en ce qu'au moins un corps d'appui qui maintient l'excentrique (25) de manière réglable, est orienté sensiblement parallèlement par rapport audit excentrique (25) et à l'axe longitudinal (26) de celui-ci et appliqué avec sa surface extérieure contre ledit excentrique.

4. Outil d'usinage par enlèvement de copeaux selon la revendication 2, caractérisé en ce qu'au moins un corps d'appui (32, 33) qui maintient l'excentrique !25) de manière réglable est orienté sensiblement radialement ou le long d'une sécante par rapport audit excentrique (25) et à l'axe longitudinal (26) de celui-ci.

5. Outil d'usinage par enlèvement de copeaux selon la revendication 4, caractérisé en ce qu'au moins un corps d'appui (32, 33) orienté radialement ou le long d'une sécante, bute avec l'une de ses extrémités contre l'excentrique (25).

6. Outil d'usinage par enlèvement de copeaux selon la revendication 4, caractérisé en ce qu'au moins un corps d'appui (32, 33) orienté radialement ou le long d'une sécante, s'étend sensiblement tangentiellement par rapport à l'excentrique (25).

7. Outil d'usinage par enlèvement de copeaux selon la revendication 6, caractérisé en ce qu'au moins un corps d'appui (32, 33) disposé tangentiellement par rapport à l'excentrique (25) et ledit excentrique (25) s'appliquent l'un contre l'autre en position croisée.

8. Outil d'usinage par enlèvement de copeaux selon l'une des revendications 6 ou 7, caractérisé en ce qu'au moins un corps d'appui (32, 33) disposé sensiblement tangentiellement par rapport à l'excentrique (25) est appliqué avec sa surface extérieure (37) contre la surface extérieure (39, 47) de l'excentrique (25).

9. Outil d'usinage par enlèvement de copeaux selon l'une des revendications 2 à 8, caractérisé en ce qu'il comprend deux corps d'appui (32, 33) qui sont disposés à distance l'un de l'autre le long de l'axe longitudinal (26) de l'excentrique (25).

10. Outil d'usinage par enlèvement de copeaux selon la revendication 9, caractérisé en ce qu'au moins l'un des deux corps d'appui (32, 33) est à son tour réalisé sous la forme d'un élément d'ajustage (39) réglable et présentant sensiblement la forme d'une came.

11. Outil d'usinage par enlèvement de copeaux selon la revendication 10, caractérisé en ce que l'élément d'ajustage (39) comporte sur la périphérie un élément excentrique (40) qui est appliqué contre l'excentrique (25, 38) pour le déplacement transversal de celui-ci.

12. Outil d'usinage par enlèvement de copeaux selon l'une des revendications 10 ou 11, caractérisé en ce que l'élément d'ajustage (39) est conformé en boulon lequel est monté dans un logement (35), en particulier dans un alésage, du corps de base (11) de manière à pouvoir être déplacé et tourné autour de son axe longitudinal (36).

13. Outil d'usinage par enlèvement de copeaux selon l'une des revendications 10 à 12, caractérisé en ce que l'élément d'ajustage (39) présente dans la région de son élément excentrique (40) une gorge (41) par exemple circulaire dans laquelle s'engage dans la zone de croisement une section (38) de préférence sensiblement cylindrique de l'excentrique (25), avec blocage à engagement positif de l'élément d'ajustage (39) dans sa direction longitudinale.

14. Outil d'usinage par enlèvement de copeaux selon la revendication 13, caractérisé en ce que la gorge (41) présente une section transversale en forme d'arc.

15. Outil d'usinage par enlèvement de copeaux selon l'une des revendications 13 ou 14, caractérisé en ce que la section (38) de préférence sensiblement cylindrique de l'excentrique (25) est l'une des extrémités terminales de ce dernier dont l'une des faces axiales s'écarte de l'élément excentrique (28) sensiblement médian.

16. Outil d'usinage par enlèvement de copeaux selon l'une des revendications 13 à 15, caractérisé en ce que la section (38) de préférence sensiblement cylindrique présente un diamètre extérieur réduit.

17. Outil d'usinage par enlèvement de copeaux selon l'une des revendications 2 à 16, caractérisé en ce qu'un second corps d'appui (33) est appliqué contre une section (45) de préférence excentrique à l'extrémité de l'élément excentrique (28) médian.

18. Outil d'usinage par enlèvement de copeaux selon la revendication 17, caractérisé en ce que la section (45) de préférence excentrique de l'excentrique (25) comprend une gorge (47) de préférence centrée et par exemple circulaire dans laquelle s'engage, dans la zone de croisement, le second corps d'appui (33), avec blocage à engagement positif de l'excentrique (25) en direction de son axe longitudinal (26).

19. Outil d'usinage par enlèvement de copeaux selon la revendication 18, caractérisé en ce que la gorge (47) de l'excentrique (25) présente une section transversale en forme de U.

20. Outil d'usinage par enlèvement de copeaux selon l'une des revendications 17 à 19, caractérisé en ce que le second corps d'appui (33) est conformé, de manière analogue au premier corps d'appui (32), en élément d'ajustage réglable qui présente sensiblement la forme d'une came.

21. Outil d'usinage par enlèvement de copeaux selon l'une des revendications 17 à 19, caractérisé en ce que le second corps d'appui (33) est conformé en boulon (43) sensiblement cylindrique lequel est maintenu dans un alésage (44) du corps de base (11) de façon à être bloqué en translation.

22. Outil d'usinage par enlèvement de copeaux selon l'une des revendications 1 à 21, caractérisé en ce que la surface périphérique (27) de l'élément excentrique (28) médian et de la section (45) de préférence excentrique de l'excentrique (25) suit sensiblement une spirale créant ainsi l'excentricité (3) de l'excentrique (25).

23. Outil d'usinage par enlèvement de copeaux selon l'une des revendications 11 à 22, caractérisé en ce que la surface extérieure (37) de l'élément excentrique (40) de l'élément d'ajustage (39) suit sensiblement une spirale créant ainsi l'excentricité.

24. Outil d'usinage par enlèvement de copeaux selon l'une des revendications 1 à 23, caractérisé en ce que l'excentrique (25) est disposé à l'intérieur d'un logement (29) du corps de base (11) et/ou du support de plaquette portant une plaquette de coupe, qui est orienté dans le sens longitudinal, par exemple parallèlement à l'axe central longitudinal (13) du corps de base (11).

25. Outil d'usinage par enlèvement de copeaux selon l'une des revendications 1 à 23, caractérisé en ce que l'excentrique (25) est disposé à l'intérieur d'un logement du corps de base (11) et/ou du support de plaquette portant une plaquette de coupe, qui est orienté transversalement, par exemple sensiblement orthogonalement jar rapport à l'axe central longitudinal (13) du corps de base (11).

26. Outil d'usinage par enlèvement de copeaux selon l'une des revendications 24 ou 25, caractérisé en ce qu'il comprend un excentrique (25) orienté dans le sens longitudinal, par exemple pour le réglage radial, et un excentrique orienté dans le sens transversal, par exemple pour le réglage axial.

27. Outil d'usinage par enlèvement de copeaux selon l'une des revendications 1 à 26, caractérisé en ce qu'il est conformé en outil à friction de préférence à un seul tranchant.

28. Outil d'usinage par enlèvement de copeaux selon l'une des revendications 1 à 26, caractérisé en ce qu'il est conformé en outil à percer ou à fraiser.

29. Outil d'usinage par enlèvement de copeaux, comprenant un corps de base (11) dans lequel est disposée au moins une plaquette de coupe (14) pouvant être réglée directement ou indirectement - par l'intermédiaire d'un support de plaquette - et bloquée, et un excentrique (25) pouvant être tourné autour de son axe longitudinal (26), qui est appliqué contre la plaquette de coupe (14) et respectivement contre le support de plaquette et soutient cette dernière (14) ou ce dernier par rapport au corps de base (11), caractérisé en ce que l'excentrique (25) est à son tour maintenu de manière réglable dans la direction de son axe longitudinal (26) et présente une excentricité (e) de son élément excentrique (28) qui diminue dans la direction de son axe longitudinal (26).
